# EUROPÄISCHE PATENTANMELDUNG

(11) **EP 3 330 442 A1**
(43) Veröffentlichungstag der Anmeldung: **06.06.2018**
(21) Anmeldenummer: 17204668.2
(22) Anmeldetag: 30.11.2017
(51) Int. Cl.: E03B 1/04

(54) **NACHRÜSTBARES DUSCHKREISLAUFSYSTEM**

(30) Priorität: 03.12.2016 DE 202016007421 U
(71) Anmelder: Malischewski, Mathias, 18057 Rostock (DE)
(72) Erfinder: Malischewski, Mathias, 18057 Rostock (DE)
(74) Vertreter: Limbeck, Achim

(57) **Zusammenfassung**

Ein nachrüstbares Duschkreislaufsystem (130) für eine Dusche oder eine Badewanne, welche zumindest eine Handbrause (111) und/oder einen Duschkopf (123), eine Duschwanne (119) sowie mindestens eine Öffnung (118) umfasst, welche für die Ableitung von Brauchwasser über eine Drainage vorgesehen ist, wobei mittels des Duschkreislaufsystems (130) das Brauchwasser aus der Duschwanne (119) zumindest teilweise aufgefangen und in einem Duschkreislauf () wieder verwendet wird. Das Duschkreislaufsystem (130) ist dadurch gekennzeichnet, dass es zumindest eine Pumpeneinheit (210) mit einem Gehäuse (211) umfasst, wobei die Pumpeneinheit (210), einen Brauchwasserzulauf (270), einen Kreislaufwasseranschluss (280) sowie einen Frischwasserzulauf (260) aufweist, der vor einem Kontakt mit dem Brauchwasser geschützt ist.

## Beschreibung

### Technisches Gebiet

Die vorliegende Erfindung betrifft ein nachrüstbares Duschkreislaufsystem für eine Dusche oder eine Badewanne nach dem Obersatz des Patentanspruchs 1.

### Stand der Technik

Der Wasserverbrauch im Haushalt ist mit ca. 100 - 300 Liter pro Kopf und Tag in den Industrieländern sehr hoch. Ein nicht unbeträchtlicher Anteil an diesem Verbrauch wird für das tägliche Duschen aufgewendet. Bei einem typischen Duschvorgang werden über einen Zeitraum von ca. 5 Minuten ungefähr 50 - 60 Liter Wasser verbraucht. Von vielen Menschen wird es zudem als angenehm empfunden, beispielsweise an kälteren Tagen, länger duschen zu können. Entsprechend steigen die Kosten für die Bereitstellung und Temperierung des benötigten Frischwassers. Die Heizkosten sind insbesondere bei einem Einsatz von elektrischen Durchlauferhitzern hoch. Der Frischwasserverbrauch stellt in vielen Regionen der Welt ein deutlich größeres Problem als in Deutschland dar.

Neben dem Energieverbrauch ist der Komfort beim Duschen ein weiterer wichtiger Aspekt. Übliche Wasseranschlüsse stellen ca. 15 Liter Wasser pro Minute bereit. Klassische Brauseduschköpfe können an solchen Wasseranschlüssen ca. 10 - 15 Liter Wasser pro Minute bereitstellen. Bei den beliebten größeren Flächenduschköpfen ist ein höherer Volumenstrom wünschenswert, um ein angenehmeres Duschgefühl zu ermöglichen.

Das bereitgestellte Wasser hat während des Duschens nur einen kurzen Körperkontakt. Ohne weitere Maßnahmen geht das Wasser sowie die darin enthaltene Energie über den Abfluss verloren, so dass ein herkömmlicher Duschvorgang einen recht ineffizienten Vorgang darstellt. Das Wasser hat nach dem vorangegangenen Körperkontakt nur eine unwesentlich geringere Reinheit als das bereitgestellte Frischwasser. Zudem enthält ist die Temperatur des abgeführten Brauchwassers nur unwesentlich geringer als die Temperatur, mit welcher es über den Duschkopf bereitgestellt worden ist. Für längere Duschvorgänge wäre es daher wünschenswert, das Wasser in geeigneter Weise zumindest teilweise auffangen und über einen Kreislauf weiter zum Duschen nutzen zu können.

Wasserkreislaufsysteme sind grundsätzlich aus industriellen Anwendungen, wie z.B. Waschstraßen, bekannt. Im Haushaltsbereich sind Kreislaufsystemsysteme in Geschirrspülern bekannt. Auch verschiedene Kreislaufsysteme sind im Stand der Technik bekannt.

US 5,353,448 A beschreibt mehrere Ausführungsformen von Kreislaufsystemen. Die Ausführungsformen, die Lösungen für eine Zuheizung des zurückgeführten Wassers beschreiben, sehen keine strikte Trennung des Kreislaufwassers und des Frischwassers vor. Die Verbindung von Kreislauf- und Frischwassersystem erfolgt über Rückschlagventile, bei denen Fehlfunktionen nicht sicher ausgeschlossen werden können und die als alleiniger Schutz nach DIN 1988, DIN EN 1717, sowie TrinkwV § 17 nicht ausreichend sind. Zudem ist die Energieversorgung des Kreislaufsystems nicht sicher gelöst. Die beschriebene Energieversorgung über einen direkten Anschluss des Kreislaufsystems an ein 230-Volt-Netzwerk ist aufgrund der im Fehlerfall auftretenden Fehlerströme als nachteilig anzusehen.

Die in US 5,353,448 A beschriebenen Lösungen macht es erforderlich, das Kreislaufsystem entweder ebenfalls über ein Ladekabel an das 230-Volt-Netzwerk anzuschließen oder die gesamte Einheit einschließlich Pumpe und Batterie abzurüsten und außerhalb der Dusche aufzuladen.

Die beschriebenen Lösungen sind somit entweder nicht ausreichend sicher oder unkomfortabel.

US 2014/0304908 A beschreibt ein System, welches für eine Nachrüstung in einer bestehenden Dusche vorgesehen ist. Newman können unter anderem Lösungen für den Wasserkreislauf, die Wasserheizung, die Temperaturregelung sowie die Behandlung von Erregern und Keimen mittels ultraviolettem Lichts entnommen werden. Die beschriebene Energieversorgung über einen direkten Anschluss des Kreislaufsystems an ein 230-Volt-Netzwerk ist aufgrund der im Fehlerfall auftretenden Fehlerströme als nachteilig anzusehen. Weiterhin nachteilig ist der umfangreiche Aufbau mit vielen Rohrleitungen, was komplex bei der Installation ist und Reinigung ist. Zudem kann das System bei Bedarf aufgrund der Sperrigkeit nicht auf einfache Weise entfernt werden.

US2011/0225722 A hat im Hinblick auf die Installation ähnliche Nachteile. Insbesondere die Integration des Pumpsystems in die Duschwanne macht eine einfache Nachrüstung unmöglich.

### Darstellung der Erfindung

Der vorliegenden Erfindung liegt die Aufgabe zu Grunde, ein Duschkreislaufsystem zu schaffen, welches die vorgenannten Probleme ausräumt und welches dafür vorgesehen ist, den Wasserverbrauch zu reduzieren und auf einfache Weise in bestehenden Duschen oder Badewannen installiert zu werden. Zudem soll eine normkonforme und zugleich komfortable Zuheizung des Kreislaufwassers über das Frischwassersystem ermöglicht werden.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen sind in den abhängigen Unteransprüchen angegeben.

Das erfindungsgemäße Duschkreislaufsystem umfasst gemäß dem Stand der Technik zumindest eine Handbrause und/oder einen Duschkopf, eine Duschwanne sowie mindestens eine Öffnung, welche für die Ableitung von Brauchwasser über eine Drainage vorgesehen ist, wobei mittels des Duschkreislaufsystems das Brauchwasser aus der Duschwanne zumindest teilweise aufgefangen und in einem Duschkreislauf wieder verwendet wird.

Erfindungsgemäß ist das Duschkreislaufsystem dadurch gekennzeichnet, dass das Duschkreislaufsystem zumindest eine Pumpeneinheit mit einem Gehäuse umfasst, wobei die Pumpeneinheit, einen Brauchwasserzulauf, einen Kreislaufwasseranschluss sowie einen Frischwasserzulauf aufweist, der vor einem Kontakt mit dem Brauchwasser geschützt ist.

### Kurzbeschreibung der Zeichnungen

Weitere Ziele, Merkmale, Vorteile und Anwendungsmöglichkeiten des Duschkreislaufsystem ergeben sich aus der nachfolgenden Beschreibung eines Ausführungsbeispiels anhand der Zeichnung.

In den Zeichnungen zeigen
Fig. 1 eine Duschzelle mit einem Duschkreislaufsystem;
Fig. 2 eine Detailansicht des Duschkreislaufsystems in einem seitlichen Schnitt.

### Ausführung der Erfindung

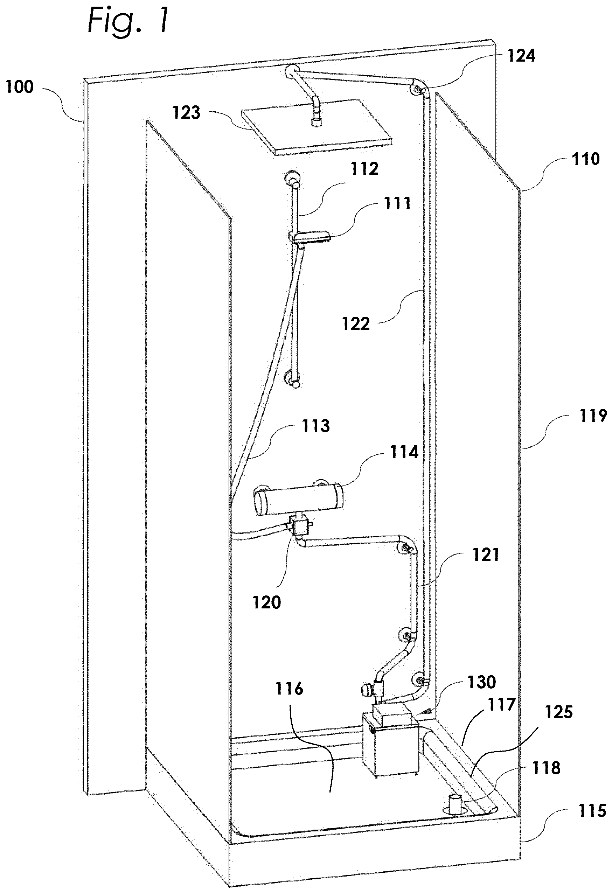

Fig. 1 stellt eine Duschzelle 100 dar, die für einen Kreislaufbetrieb mit einem nachrüstbaren Duschkreislaufsystem 130 versehen ist. Die Duschzelle 100 umfasst eine Duschkabine 110, eine Handbrause 111 für einen Frischwasserbetrieb, der an einer Halterung 112 befestigt und über eine Leitung 113 (vorzugsweise ein Schlauch) mit einem Frischwasserzulauf 114 verbunden ist. Der Frischwasserzulauf 114 kann beispielsweise als eine Mischbatterie für die Zuführung von heißem und kaltem Frischwasser ausgeführt sein. Die Leitung 113 ist über ein Umschaltventil 120 mit dem Frischwasserzulauf 114 verbunden. Die Duschkabine 110 umfasst eine Wand 119 und eine Wanne 115 mit einem Boden 116 und einem Rand 117 sowie eine Öffnung 118, welche für die Ableitung von Abwasser über eine Drainage - nicht gezeigt - vorgesehen ist. Die Öffnung 118 kann mittels eines Überlaufstöpsels 125 verschlossen werden.

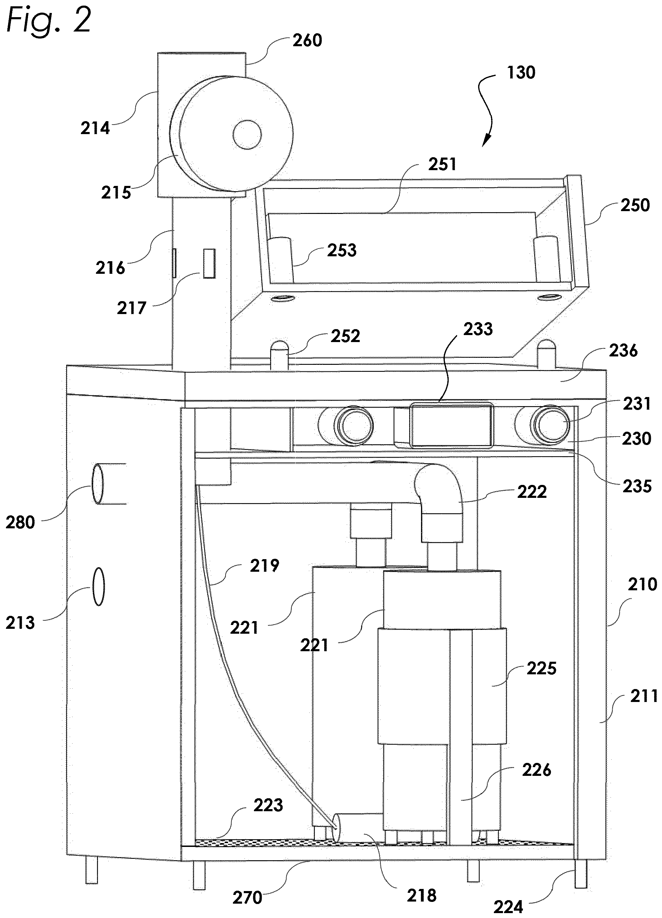

Das Duschkreislaufsystem 130 bzw. dessen Gehäuse 211 ist so ausgestaltet, dass es eben auf dem Boden 116 der Wanne 115 angeordnet werden kann. Das Duschkreislaufsystem 130 ist so eingerichtet, dass es Brauchwasser, welches sich in der Wanne 115 angesammelt hat, aufnehmen kann. Weiterhin ist das Duschkreislaufsystem 130 über eine Leitung 121 mit dem Umschaltventil 120 bzw. dem Frischwasserzulauf 114 verbindbar, so dass das Duschkreislaufsystem 130 bei Bedarf vortemperiertes Frischwasser aufnehmen kann. Das Duschkreislaufsystem 130 ist über eine weiteren Leitung 122 mit einem Duschkopf 123 verbunden. Das Duschkreislaufsystem 130 sowie die Funktionsweise des Systems werden im nachfolgenden im Anhand der Fig. 2 weiter beschrieben. Der Duschkopf 123 kann beispielsweise als großflächiger Regenduschkopf ausgeführt sein. Leitung 122 und Duschkopf 123 sind mit einer Halterung 124 an der Duschzelle 100 befestigt.

In einer vereinfachten Ausführungsform - hier nicht dargestellt - können das Umschaltventil 120 und die Leitung 121 entfallen. Stattdessen kann die Leitung 113 mittels eines Schnellverschlusses von der Handbrause 111 getrennt und mit dem Duschkreislaufsystem 130 verbunden werden. Hierdurch können die Kosten für eine Nachrüstung reduziert werden, wenngleich im Betrieb so einige zusätzliche Handgriffe durch den Anwender notwendig sind.

Fig. 2 zeigt eine Detailansicht des Duschkreislaufsystems 130 in einem seitlichen Schnitt. Das Duschkreislaufsystem 130 umfasst eine Pumpeneinheit 210, eine Batterieeinheit 250, die lösbar mit der Pumpeneinheit 210 verbunden ist, einen Frischwasserzulauf 260, einen Brauchwasserzulauf 270 und einen Kreislaufwasseranschluss 280.

Der Frischwasserzulauf 260 ist für die Zuführung von vortemperiertem Frischwasser aus dem Frischwasserzulauf 114 vorgesehen und kann dafür z.B. über die Leitung 121 mit dem Frischwasserzulauf 114 fest verbunden werden. Alternativ kann die Verbindung mit dem Frischwasserzulauf 114 auch trennbar über die Leitung 113 hergestellt werden. Dazu können die Handbrause 111 und der Frischwasserzulauf 260 mit geeigneten Schnellverschlüssen versehen sein. In dieser Ausführung entfallen das Umschaltventil 120 und die Leitung 121 entsprechend. Versuche haben gezeigt, dass die Duschmischung von Brauchwasser mit zuheizendem Frischwasser möglichst dicht am Kreislaufeingang erfolgen muss, um die Wärme effizient in den Kreislauf einzubringen. Eine Wasserdurchmischung an anderer Stelle der Wanne seitlich neben dem Gehäuse, lässt die eingebrachte Wärme ineffizient an der großen Oberfläche Wanne und es Brauchwassers abkühlen.

In der in Fig. 2 dargestellten Ausführung ist der Frischwasserzulauf 260 als kurzer Rohrabschnitt ausgeführt und mit einem Ventil 214 verstehen, dass durch ein Thermostat 215 geregelt werden kann. In einer bevorzugten Ausführung sind Ventil 214 und Thermostat 215 als Thermostatventil ausgeführt. Der Frischwasserzulauf 260 ist so ausgeführt, dass dieser eine deutlich erhöhte Lage gegenüber dem maximal möglichen Wasserstand in der Wanne 115 hat, welcher durch die Höhe des Wannenrandes 117 bzw. die Höhe des Überlaufstöpsels 125 vorgegeben ist. Unterhalb des Ventils 214 ist ein Fallrohr 216 angebracht, welches sich in den Innenraum der Pumpeneinheit 210 erstreckt. Somit kann Frischwasser über den Frischwasserzulauf 260 in den Innenraum der Pumpeneinheit 210 zugeführt werden. In einer alternativen Ausführung nicht dargestellt kann das Ventil 214 auch ohne Fallrohr mit der Pumpeneinheit 210 verbunden sein. In einer Weiterbildung ist unterhalb des Ventils 214 ein Wasserzähler vorgesehen, der eingerichtet ist, die Menge des über den Frischwasserzulauf 260 zugeführten Frischwassers zu messen und ein entsprechendes Messsignal bereitzustellen. In einer weiteren, weniger bevorzugten Ausführung nicht dargestellt kann das Frischwasser unterhalb des Ventils 214 in die Wanne 115 geleitet werden.

Die Pumpeneinheit 210 umfasst ein Gehäuse 211. Das Gehäuse 211 ist mit einer Öffnung 213 versehen, die als Überlauföffnung den maximalen Füllstand des Innenraums der Pumpeneinheit 210 begrenzt, den Innenraum auf Atmosphärendruck hält und somit den Frischwasserzulauf 260 vor einem Kontakt mit Brauchwasser schützt. Die Öffnung 213 ist unterhalb des Endes des Fallrohrs 216 angeordnet. Bevorzugt ist die Öffnung 213 oberhalb typischer maximal möglicher Füllhöhen von Wannen für den Duschbereich, beispielsweise in einer Höhe von etwa 15 Zentimeter angeordnet. Alternativ oder ergänzend dazu, kann das Fallrohr 216 selbst mit wenigstens einer Öffnung 217 versehen sein. Durch die Öffnungen 213, 217 kann im Fall eines Unterdrucks im Frischwassersystem sicher verhindert werden, dass Brauchwasser aus dem Inneren der Pumpeneinheit 210 angesaugt wird, da eine räumliche Trennung zwischen Brauchwasser und dem Frischwasserzulauf 260 gewährleistet ist.

In einer bevorzugten alternativen Ausführung nicht dargestellt ist das Ventil 214 und der Thermostat 215 als Thermostatventil ausgeführt und ohne Fallrohr in die Pumpeneinheit integriert. Das Gehäuse 211 weist in einer solchen Ausführung außenseitig lediglich den Frischwasserzulauf 260 bzw. einen Anschluss zur Befestigung einer Leitung 113, 121 auf. Innenseitig ist das Thermostatventil so angeordnet, dass zugeführtes Frischwasser oberhalb der Öffnung 213 an den Innenraum abgegeben wird.

Das Gehäuse 211 besteht aus einem elektrisch nichtleitenden und chemisch gegenüber typischerweise im Nassbereich eingesetzten Chemikalien weitestgehend inerten Material. Vorzugsweise ist das Gehäuse 211 aus einem Kunststoff, beispielsweise PE, PP, PET oder PMMA ausgeführt. In einer bevorzugten Ausgestaltung ist das Gehäuse 211 schallisolierend ausgeführt. Dazu kann das Gehäuse 211 beispielsweise doppelwandig oder aus einem Kompositmaterial ausgeführt sein. Eine Schallisolierung kann vorteilhaft sein, um Betriebsgeräusche von Pumpen zu unterdrücken. Die Oberfläche des Gehäuses 211 ist bevorzugt glatt ausgeführt, um ein Anhaften von Fett und Verunreinigung zu reduzieren.

Das Gehäuse 211 ist weiterhin so ausgeführt, dass es, beispielsweise von der Unterseite, für Wartungs- und Reinigungszwecke, geöffnet werden kann. In der in Fig. 2 dargestellten Ausführung ist der Brauchwasserzulauf 270 als Boden des Gehäuses 211 ausgeführt. Der Boden ist mit entsprechenden Öffnungen nicht dargestellt versehen, so dass über diese Öffnungen Brauchwasser in den Innenraum der Pumpeneinheit 210 einströmen kann, sobald der Füllstand der Wanne 115 ausreichend ist. Um einen ausreichenden Durchfluss zu gewährleisten und den Boden 116 der Wanne 115 vor Beschädigungen zu schützen, ist das Gehäuse 211 auf der Unterseite mit Füßen 224 versehen. Vorzugsweise sind die Füße 224 weniger als etwa zehn Millimeter hoch, damit das Brauchwasser ungehindert durch die Öffnungen im Boden des Gehäuses 211 einströmen kann. In einer besonders bevorzugten Ausführung sind die Füße 224 gummiert und über eine Schraubverbindung am Gehäuse 211 befestigt. Bevorzugt kann der als Brauchwasserzulauf ausgeführte Boden des Gehäuses 211 durch das Lösen der Schraubverbindung abgenommen werden. Auf diese Weise ist eine einfache Wartung und Reinigung der Pumpeneinheit 210 möglich.

In den Bodenbereich des Gehäuses 211 ist ein Sieb 223 eingesetzt, welches bevorzugt eine glatte Oberfläche aufweist und eine Vielzahl von kleinen Löchern versehen ist. Der Lochdurchmesser ist bevorzugt kleiner gleich 2 mm, besonders bevorzugt kleiner gleich 1 mm gewählt. Das Sieb 223 kann aus einem rostfreien Metall oder einem Kunststoff bestehen. Die Dicke des Siebs 223 ist möglichst gering und auf den Lochdurchmesser abgestimmt, um den Zustrom von Brauchwasser in den Innenraum des Gehäuses 211 nicht unnötig durch einen Kapillareffekt zu begrenzen. In einer bevorzugten Ausgestaltung ist das Sieb 223 so in den Boden des Gehäuses 211 eingesetzt, dass dieses über die zuvor beschriebene Schraubverbindung gemeinsam mit dem Boden des Gehäuses 211 fixiert bzw. gelöst werden kann. In einer alternativen Ausgestaltung ist das Sieb 223 durch eine separate Schraubverbindung fixiert. In einer alternativen Ausgestaltung umfassen die Seitenwände des Gehäuses 211 auf der Innenseite Nuten, in die das Sieb 223 eingesetzt werden kann. In einer weiteren alternativen Ausgestaltung ist das Sieb 223 auf der Außenseite des Gehäuses 211 vorgesehen. In einer solchen Ausgestaltung sind beispielsweise Nuten auf der Unterseite des Bodens des Gehäuses 211 vorgesehen, in die das Sieb 223 eingeschoben werden kann. Mit Vorteil muss das Gehäuse 211 bei einer solchen Ausgestaltung zur Reinigung des Siebs 223 nicht geöffnet werden.

In einer weiteren Ausführungsform (nicht dargestellt) befindet sich das Sieb 223 direkt und unmittelbar an der Ansaugung der Pumpe 221. Es wird nicht durch Gewichtskraft von verdrängtem Brauchwasser durchströmt, sondern direkt durch den Sog der Pumpe 221. Die Durchmischung von Brauchwasser und zuheizendem Frischwasser findet innerhalb des Raums der seitlichen Gehäusewände statt, bevor anschließend das Sieb 223 passiert wird. Ein Gehäuseboden ist im Bereich des Siebs 223 nicht vorhanden. Dieser Aufbau ermöglicht einen besonders niedrigen Wasserstand in der Wanne 115.

Im Inneren des Gehäuses 211 der Pumpeneinheit 210 befindet sich eine oder mehrere Pumpen 221, welche über Schläuche oder Rohre 222 auf ihrer Druckseite mit einem gemeinsamen Kreislaufwasseranschluss 280 verbunden ist. Die Pumpe 221 ist mittels einer Halterung nicht dargestellt mit ihrer Ansaugseite direkt an dem oder in einem Abstand von wenigen ein Millimetern über dem Boden des Gehäuses 211 bzw. dem Sieb 223 angeordnet. Durch diese Anordnung kann die Pumpe 221 Wasser aus dem Inneren des Gehäuses 211 dem Pumpensumpf aufnehmen, sobald ausreichend Brauchwasser über den Brauchwasserzulauf 270 eingeströmt ist. Wird im laufenden Betrieb zusätzlich Frischwasser über den Frischwasserzulauf 260 zugeführt, so durchmischt sich das zugeführte Frischwasser mit dem eingeströmten Brauchwasser, so dass über die Pumpe 221 an dem Kreislaufwasseranschluss 280 temperiertes Brauchwasser bereitgestellt werden kann. Durch einen möglichst geringen Abstand zwischen der Ansaugseite der Pumpe 221 und dem Boden des Gehäuses 211 bzw. dem Sieb 223 wird gewährleistet, dass die Pumpe 221 bereits bei geringen Wasserfüllständen im Pumpensumpf / im Innenraum der Pumpeneinheit 210 Wasser ansaugen kann. Dadurch kann das Duschkreislaufsystem 130 auch in Wannen 115 mit geringen Wandhöhen eingesetzt werden.

Die Pumpe 221 ist als Tauchpumpe mit einer Betriebsspannung im Kleinspannungsbereich, beispielsweise mit einer Nennspannung von 12V DC gewählt. Die spannungsführenden Teile von Tauchpumpen sind gegen die Umwelt isoliert. Die Pumpe 221 ist zur Abführung von Betriebswärme auf ihrer Mantelfläche mit einem Kühlermantel 225 versehen, der zusätzlich mit einem Wärmeableiter 226 verbunden sein kann. Sowohl Kühlermantel 225 als auch der Wärmeableiter 226 bestehen aus einem gut wärmeleitfähigen Material, idealerweise Aluminium oder Kupfer. Da einfache, kommerziell verfügbare Tauchpumpen bis zu einer Wassertemperatur von 60°C betrieben dauerhaft betrieben werden können, es ein solcher Betrieb jedoch erfordert, dass die Tauchpumpen zur Kühlung vollständig von Wasser umspült werden, kann über den Kühlermantel 225 und den Wärmeableiter 226 auch bei geringerem Wasserfüllständen im Pumpensumpf / im Innenraum der Pumpeneinheit 210 eine ausreichende Kühlung gewährleistet werden. In einer bevorzugten Weiterbildung ist das Sieb 223 aus einem rostfreien Metall ausgeführt und mit dem Wärmeableiter 226 so verbunden, dass über die Oberfläche des Siebs 223 Betriebswärme der Pumpe 221 abgeführt werden kann.

Im unteren Bereich der Pumpeneinheit ist ein Sensor 218, beispielsweise ein Kapillarrohrfühler angeordnet, welcher über ein Kapillarrohr 219 mit dem Thermostat 215 so verbunden ist, dass das Thermostat 215 den Zufluss von Frischwasser über das Ventil 214 abhängig von der Temperatur des Wassers im Pumpensumpf einstellen kann. Alternativ kann das Thermostat elektronisch gesteuert ausgeführt und ist mit einem geeigneten Sensor 218, beispielsweise einem PT100-Element, verbunden sein, welches die Temperatur des Wassers im Pumpensumpf erfasst und dem Thermostat ein Temperatursignal bereitstellt. Besonders bevorzugt sind das Ventil 214 und der Thermostat 215 als elektronisch gesteuertes Thermostatventil integral ausgeführt. Dabei kann das Ventil 214 als elektrisch gesteuertes Ventil ausgeführt sein, welches über einen Regelkreis temperaturabhängig angesteuert wird.

Im oberen Teil des Gehäuses 211 ist ein Bereich 230 vorgesehen, der mittels einer Trennwand 235 wasserdicht von dem Innenraum des Gehäuses 211 abgetrennt ist. Das Gehäuse 211 ist weiterhin mit einem Deckel 236 versehen, der für Wartungszwecke von dem Gehäuse 211 gelöst werden kann. Der Deckel 236 ist mit einem Dichtungsring nicht dargestellt vorgesehen, um den Bereich 230 wasserdicht gegenüber Spritzwasser abzudichten.

Im oberen Teil des Gehäuses 211 sind in dem Bereich 230 ein oder mehrere Schalter 231 vorgesehen. Einer der Schalter 231 ist elektrisch über elektrische Kabel nicht dargestellt mit der Pumpe 221 und der Batterieeinheit 250 verbunden und ermöglicht es, die Pumpe 221 für den Kreislaufbetrieb einzuschalten bzw. wieder auszuschalten. Im eingeschalteten Zustand versorgt die Batterieeinheit 250 die Pumpe 221 mit der für den Betrieb benötigten elektrischen Leistung. Neben den ein oder mehreren Schaltern 231 kann ein Anzeige- / Eingabeelement 233 vorgesehen sein. Ein solches Element kann beispielsweise für die Vorgabe der Kreislaufwassertemperatur für ein elektronisches Thermostatventil vorgesehen sein, den Ladezustand der Batterie nachfolgend beschrieben oder eine andere Zustandsinformation des Systems, beispielsweise einen Hinweis auf eine nötige Wartung/Reinigung, eine Durchflussmenge oder einen Frischwasserverbrauch anzeigen. In einer solchen Weiterbildung ist das Anzeige- / Eingabeelement 233 mit einer entsprechenden Steuereinheit und einer zusätzlichen Batterie zur Pufferung der Steuereinheit jeweils nicht gezeigt verbunden. In einer besonders bevorzugten Weiterbildung ist das Anzeige-/ Eingabeelement 233 mit der Steuereinheit zu einer Baugruppe vereinigt ausgeführt. Ist ein Wasserzähler zur Messung des zugeführten Frischwassers vorgesehen, so kann ein entsprechendes Messsignal an der Steuereinheit anliegen.

In einer Weiterbildung des Systems kann der Schalter 231 als Hauptschalter so eingerichtet sein, dass ein manuelles Betätigen des Schalters 231 den Kreislaufbetrieb ein- bzw. ausschaltet, die Pumpe 221 jedoch abhängig vom Anliegen eines weiteren Schaltsignals betrieben wird. Ein solches Schaltsignal kann beispielsweise durch einen Wasserstandschalter nicht dargestellt bereitgestellt werden, der im Pumpensumpf / im Innenraum der Pumpeneinheit 210 angeordnet ist. Der Schalter kann beispielsweise als Schwimmschalter oder Kontaktschalter ausgeführt sein und ansprechend ab dem Erreichen eines vorgegebenen, ausreichend hohen Wasserstands im Pumpensumpf ein Schaltsignal bereitstellen. Somit kann der Kreislaufbetrieb bei aktiviertem Hauptschalter 231 anlaufen und die Pumpe 221 den Betrieb aufnehmen, sobald ein minimaler Füllstand erreicht ist. Der Betrieb wird fortgesetzt, solange wenigstens der minimaler Füllstand vorliegt. Eine solche Weiterbildung kann zum einen die Pumpe 221 vor einem Betrieb bei einem zu geringen Wasserstand schützen und zum anderen den Komfort für den Anwender erhöhen, der nicht bewusst auf den richtigen Moment zum Einschalten des Kreislaufbetriebs warten muss. Bei einer geschickten Anordnung des Schalters kann der Kreislaufbetrieb zeitnah nach dem Einsetzen des Überlaufstöpsels 125 automatisch auslösen. In einer vereinfachten Ausführung kann lediglich der Wasserstandschalter vorgesehen sein, der ansprechend auf das Erreichen eines minimalen Füllstands ein Schaltsignal für die Pumpe 221 bereitstellt, ohne dass ein Hauptschalter vorgesehen ist. In einer solchen Ausführung würde die Pumpe 221 automatisch bei Erreichen des nötigen Füllstandes anlaufen und aus der Batterieeinheit 260 mit der benötigten elektrischen Leistung versorgt werden. Alternativ zu einem Schwimmschalter kann für ein komfortables Zuschalten auch ein akustischer Schalter vorgesehen sein, der ansprechend auf ein Signal des Anwenders das weitere Schaltsignal bereitstellen kann.

Das Gehäuse 211 ist in dem oberen Bereich, in welchem im Innenraum der wasserdichte Bereich 230 vorgesehen ist, mit Öffnungen versehen, in welche Schalter 231 und Anzeige- / Eingabeelement 233 wasserdicht eingefasst sind, so dass diese über die Außenseite bedient werden können bzw. dort sichtbar sind und im Innenbereich 230 vor Wasser geschützt sind.

In den Deckel 236 sind zwei elektrische Kontakte 252 wasserdicht eingearbeitet. Die elektrischen Kontakte 252 sind dafür vorgesehen, eine elektrische Verbindung zwischen der Pumpeneinheit 210 und der Batterieeinheit 250 herzustellen. Die elektrischen Kontakte 252 sind aus einem nicht oder wenig korrodierenden Material, wie Aluminium oder Kupfer, beschaffen. Bevorzugt weisen die elektrischen Kontakte 252 eine kreisförmige Grundfläche auf und laufen von der Grundfläche wegzeigend leicht konisch zu. Der Deckel 236 weist bevorzugt Führungselemente nicht dargestellt auf, die ein einfaches Positionieren der Batterieeinheit 250 auf der Pumpeneinheit 210 ermöglichen. Auf diese Weise werden die elektrischen Kontakte 252 vor einer mechanischen Beschädigung bei einem Aufsetzen der Batterieeinheit 250 geschützt. Die Führungselemente sind bevorzugt so ausgestaltet, dass diese die Pumpeneinheit 210 und die Batterieeinheit 250 an ihrer Grenzfläche gegeneinander in zwei Richtungen gegen ein Verrutschen fixieren. Die Führungselemente sind bevorzugt so ausgestaltet, dass diese lediglich einen polungsrichtigen Kontakt zwischen den elektrischen Kontakten 252 und der Batterieeinheit 250 ermöglichen. Um Kriechströme zwischen den beiden elektrischen Kontakten 252 weitestgehend zu unterdrücken, sind diese bevorzugt mindestens 5, besonders bevorzugt mindestens 10 Zentimetern voneinander beabstandet angeordnet. Bevorzugt sind die elektrischen Kontakte 252 im unteren Bereich durch ein Polymer gekapselt.

Die Batterieeinheit 250 besteht aus einem elektrisch nichtleitenden und chemisch gegenüber typischerweise im Nassbereich eingesetzten Chemikalien weitestgehend inerten Material. Vorzugsweise ist die Batterieeinheit 250 aus einem Kunststoff, beispielsweise PE, PP, PET oder PMMA ausgeführt. Die Batterieeinheit 250 ist wasserdicht ausgeführt und umfasst auf ihrer Unterseite Buchsen 253 für die Aufnahme der elektrischen Kontakte 252 der Pumpeneinheit 210. Die Buchsen 253 enthalten innenliegende elektrischen Kontakte.

Weiterhin ist die Unterseite der Batterieeinheit 250 mit Führungselementen nicht dargestellt verstehen, die zu den zuvor beschriebenen Führungselementen des Deckels 236 passen. Die Batterieeinheit 250 umfasst weiterhin einen abnehmbaren Deckel nicht dargestellt, der bei Bedarf einen Zugang zu dem Innenraum der Batterieeinheit 250 bietet.

Die Unterseite der Batterieeinheit 250 sowie der Deckel 236 sind mit einer glatten Oberfläche und schließen, wenn die Batterieeinheit 250 für den Betrieb auf den Deckel 236 aufgesetzt ist, nahezu spaltfrei miteinander ab. Bevorzugt sind die beiden Oberflächen jeweils leicht schräg oder gekrümmt ausgeführt, so dass sich auf dem Deckel 236 kein stehendes Wasser ansammeln kann. In einer Weiterbildung können der Deckel 236 sowie die Unterseite der Batterieeinheit 250 mit einer Beschichtung versehen sein, welche die Benetzbarkeit der Oberflächen deutlich reduziert. In einer weiteren Weiterbildung kann eine kontaktfreie, auf dem Induktionsprinzip basierende Stromversorgung zwischen der Pumpeneinheit 210 und der Batterieeinheit 250 vorgesehen sein.

In dem Innenraum der Batterieeinheit 250 ist eine Batterie 251 bzw. eine Anordnung von Batterie 251 als Spannungsquelle im Kleinspannungsbereich vorgesehen. Die Batterie 251 ist elektrisch leitend mit den Buchsen 253 verbunden. Als Batterie 251 eignen sich vorzugsweise wieder aufladbare Nickel-Metallhydrid- NiMH oder lithiumbasierte Akkumulatoren. Werden Lithium-Polymer-Akkumulatoren eingesetzt, können an der Unterseite der Batterieeinheit 250 neben den Buchsen 253 weitere Pole für das Lademanagement der Akkumulatoren vorgesehen sein.

In einer alternativen Ausführungsform umfasst die Batterieeinheit 250 die einen oder mehreren Schalter 231, Anzeige- / Eingabeelement 233 sowie ggf. eine Steuereinheit. Bei einer solchen Ausführungsform können an der Unterseite der Batterieeinheit 250 weitere elektrische Kontakte, beispielsweise für den Anschluss eines elektrischen Temperatursensors vorgesehen sein. Mit Vorteil kann in diesem Fall auf die Ausformung eines Bereichs 230 verzichtet und der innere Aufbau der Pumpeneinheit 210 vereinfacht werden.

Die erfindungsgemäße beschränkt sich in ihrer Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 100: Duschzelle
- 110: Duschkabine
- 111: Handbrause
- 112: Halterung
- 113: Leitung (Schlauch)
- 114: Frischwasserzulauf
- 115: Wanne
- 116: Boden
- 117: Rand
- 118: Öffnung
- 119: Wand
- 120: Umschaltventil
- 121: Leitung
- 122: Leitung
- 123: Duschkopf
- 124: Halterung
- 125: Überlaufstöpsel
- 130: Nachrüstbares Duschkreislaufsystem
- 210: Pumpeneinheit
- 211: Gehäuse
- 213: Öffnung
- 214: Ventil
- 215: Thermostat
- 216: Fallrohr
- 217: Öffnung
- 218: Sensor/Kapillarrohrfühler
- 219: Kapillarrohr
- 221: Pumpe
- 222: Leitung
- 223: Sieb
- 224: Fuß
- 225: Kühlermantel
- 226: Wärmeableiter
- 230: Wassergeschützter Bereich
- 231: Schalter
- 233: Anzeige- / Eingabeelement
- 235: Trennwand
- 236: Deckel
- 250: Batterieeinheit
- 251: Batterie
- 252: Steckkontakt
- 253: Buchse
- 260: Frischwasserzulauf
- 270: Brauchwasserzulauf
- 280: Kreislaufwasseranschluss

## Patentansprüche

1. Nachrüstbares Duschkreislaufsystem (130) für eine Dusche oder eine Badewanne, welche zumindest eine Handbrause (111) und/oder einen Duschkopf (123), eine Duschwanne (119) sowie mindestens eine Öffnung (118) umfasst, welche für die Ableitung von Brauchwasser über eine Drainage vorgesehen ist, wobei mittels des Duschkreislaufsystems (130) das Brauchwasser aus der Duschwanne (119) zumindest teilweise aufgefangen und in dem Duschkreislauf wieder verwendet wird,
**dadurch gekennzeichnet, dass**
das Duschkreislaufsystem (130) zumindest eine Pumpeneinheit (210) mit einem Gehäuse (211) umfasst, wobei die Pumpeneinheit (210) einen Brauchwasserzulauf (270), einen Kreislaufwasseranschluss (280) sowie einen Frischwasserzulauf (260) aufweist, der vor einem Kontakt mit dem Brauchwasser geschützt ist.

2. Duschkreislaufsystem (130) nach Anspruch 1,
**dadurch gekennzeichnet, dass**
die Pumpeneinheit (210) wenigstens eine Pumpe (221) aufweist, welche für einen Betrieb bei Kleinspannungen ausgelegt ist.

3. Duschkreislaufsystem (130) nach Anspruch 1 oder 2,
**dadurch gekennzeichnet, dass**
das Gehäuse (211) wenigstens eine Öffnung (213) aufweist, die den maximalen Füllstand des Innenraums der Pumpeneinheit (210) begrenzt und somit den Frischwasserzulauf (260) vor einem Kontakt mit Brauchwasser schützt.

4. Duschkreislaufsystem (130) nach einem der vorangegangenen Ansprüche, **dadurch gekennzeichnet, dass**
zumindest ein Fallrohr (216) vorgesehen ist, welches eingerichtet ist, Frischwasser, welches über den Frischwasserzulauf (260) bereitgestellt wird, in das Innere der Pumpeneinheit (210) zu führen, und welches wenigstens eine Öffnung (217) aufweist, die den maximalen Füllstand des Innenraums der Pumpeneinheit (210) begrenzt und somit den Frischwasserzulauf (260) vor einem Kontakt mit Brauchwasser schützt.

5. Duschkreislaufsystem (130) nach einem der vorangegangenen Ansprüche, **dadurch gekennzeichnet, dass**
der Frischwasserzulauf (260) mit einem durch ein Thermostat (215) steuerbares Ventil (214) verbunden ist und das Thermostat (215) eingerichtet ist, den Zulauf von Frischwasser über das Ventil (214) temperaturabhängig zu regeln.

6. Duschkreislaufsystem (130) nach Anspruch 5,
**dadurch gekennzeichnet, dass**
der Frischwasserzulauf (260) mit einem elektrisch gesteuerten Ventil (214) verbunden ist und das elektrisch gesteuerte Ventil (214) eingerichtet ist, den Zulauf von Frischwasser temperaturabhängig zu regeln.

7. Duschkreislaufsystem (130) nach einem der Ansprüche 5 oder 6,
**dadurch gekennzeichnet, dass**
die Pumpeneinheit (210) einen Sensor (218) umfasst, welcher eingerichtet ist, dem Thermostat (215) ein Temperatursignal bereitzustellen.

8. Duschkreislaufsystem (130) nach einem der Ansprüche 5 bis 7,
**dadurch gekennzeichnet, dass**
die Pumpeneinheit (210) einen Sensor (218) umfasst, welcher eingerichtet ist, dem elektrischen Ventil (214) zur Steuerung ein Temperatursignal bereitzustellen.

9. Duschkreislaufsystem (130) nach einem der vorangegangenen Ansprüche, **dadurch gekennzeichnet, dass**
der Brauchwasserzulauf (270) integral mit der Unterseite des Gehäuses (211) ausgeführt ist.

10. Duschkreislaufsystem (130) nach einem der vorangegangenen Ansprüche 2 bis 9, **dadurch gekennzeichnet, dass** ein Sieb (223) unmittelbar vor der Ansaugung der Pumpe (221) derart angeordnet ist, dass es direkt durch den Sog der Pumpe durchströmt werden kann.

11. Duschkreislaufsystem (130) nach einem der vorangegangenen Ansprüche, **dadurch gekennzeichnet, dass**
an der Unterseite des Gehäuses (211) ein Sieb (223) vorgesehen ist.

12. Duschkreislaufsystem (130) nach einem der vorangegangenen Ansprüche 2 bis 11,
**dadurch gekennzeichnet, dass**
die wenigstens eine Pumpe (221) mit ihrer Ansaugseite direkt an dem oder in einem Abstand von wenigen ein Millimetern über dem Sieb (223) angeordnet ist.

13. Duschkreislaufsystem (130) nach einem der vorangegangenen Ansprüche, **dadurch gekennzeichnet, dass**
sie eine Batterieeinheit (250) umfasst, welche mit der Pumpeneinheit (210) reversibel verbunden ist, wobei die die Pumpeneinheit (210) und die Batterieeinheit (250) mit Führungselementen versehen sind, welche die Batterieeinheit (250) und die Pumpeneinheit (210) in zwei Richtungen fixieren und lediglich einen polrichtigen elektrischen Kontakt zwischen der Pumpeneinheit (210) und der Batterieeinheit (250) erlauben.

14. Duschkreislaufsystem (130) nach einem der vorangegangenen Ansprüche 2 bis 13, **dadurch gekennzeichnet, dass** die Pumpeneinheit (210) einen Wasserstandschalter umfasst, der eingerichtet ist, für die Pumpe (211), ansprechend auf den Wasserfüllstand im Inneren der Pumpeneinheit (210), ein Schaltsignal bereitzustellen.

15. Duschkreislaufsystem (130) nach einem der vorangegangenen Ansprüche 2 bis 14, **dadurch gekennzeichnet, dass** die Pumpe (221) mit einem Kühlermantel (225) und/oder einem Wärmeableiter (226) ausgestattet ist, um die Pumpe (221) am Wasser des Brauchwasserzulaufs (270) zu kühlen.
